(19) Europäisches Patentamt

European Patent Office

Office européen des brevets

(11) Veröffentlichungsnummer: **0 347 565**
**A2**

(12) # EUROPÄISCHE PATENTANMELDUNG

(21) Anmeldenummer: **89107875.0**

(22) Anmeldetag: **29.04.89**

(51) Int. Cl.⁴: **C08J 9/34 , C08J 5/04**

(30) Priorität: **07.05.88 DE 3815723**

(43) Veröffentlichungstag der Anmeldung:
**27.12.89 Patentblatt 89/52**

(84) Benannte Vertragsstaaten:
**DE ES FR GB IT NL**

(71) Anmelder: **BASF Aktiengesellschaft**
**Carl-Bosch-Strasse 38**
**D-6700 Ludwigshafen(DE)**

(72) Erfinder: **Weber, Heinz, Dr.**
**Am Wehrhaus 26**
**D-6718 Gruenstadt(DE)**
Erfinder: **Bleckmann, Gerhard**
**Giselherstrasse 9**
**D-6840 Lampertheim 5(DE)**
Erfinder: **Dembek, Gerhard, Dr.**
**Professor-Otto-Dill-Strasse 3**
**D-6702 Bad Duerkheim(DE)**
Erfinder: **Ehrmann, Gerd, Dr.**
**Im Linsenbusch 9**
**D-6705 Deidesheim(DE)**
Erfinder: **Heinz, Gerhard, Dr.**
**Im Vogelsang 2**
**D-6719 Weisenheim(DE)**
Erfinder: **Schlemmer, Lothar**
**Duisbergstrasse 1A**
**D-6701 Maxdorf(DE)**

(54) **Faserverstärkte thermoplastische Integralschaumstoffe und Verfahren zu ihrer Herstellung.**

(57) Faserverstärkte thermoplastische Integralschaumstoffe der Dichte 50 bis 500 kg/m³ mit einer Randzone, deren Dicke 0,05 bis 1,5 mm beträgt, enthaltend 2 bis 60 Gew.% verstärkende Fasern.

EP 0 347 565 A2

## Faserverstärkte thermoplastische Integralschaumstoffe und Verfahren zu ihrer Herstellung

Die Erfindung betrifft thermoplastische Integralschaumstoffe, die mit Fasermatten verstärkt sind.

Mit Fasermatten, insbesondere Glasfasermatten, verstärkte Thermoplaste haben sich in der Technik erfolgreich durchgesetzt für die Herstellung von geformten Teilen für die verschiedensten Zwecke, wie Automobilsitze, Schalen, Motorgehäuse, Musikinstrumente, Kästen und dergleichen. Sie werden hergestellt durch Verpressen von Fasermatten mit einer Schmelze des Thermoplastes. Die Verbundmaterialien lassen sich durch Erwärmen und Pressen in Formen zu beliebigen Formkörpern verformen.

Thermoplastische Integralschaumstoffe, d.h. Schaumstoffe auf Basis von Thermoplasten, die eine verdichtete Randzone aufweisen, haben sich ebenfalls in der Technik erfolgreich durchgesetzt für die Herstellung von Möbeln, Gehäusen, im Kraftfahrzeugsektor, im Transportwesen, in der Bau- und in der Sportgeräteindustrie. Sie werden aus Thermoplasten durch Zugabe von chemischen Treibmitteln, die beim Erhitzen ein Treibgas abspalten, durch Extrusion oder Spritzguß hergestellt.

Aufgabe der vorliegenden Erfindung war es, die Dichte der bekannten Verbundmaterialien auf Basis von fasermattenverstärkten Thermoplasten zu reduzieren unter weitgehender Erhaltung der mechanischen Festigkeit. Andererseits war es Aufgabe der vorliegenden Erfindung, den thermoplastischen Integralschaumstoffen eine höhere Steifigkeit und Festigkeit zu verleihen. Das Ziel war, Verbundwerkstoffe bereitzustellen, die sich auszeichnen durch eine geringe Dichte, ein hervorragendes Wärmedämmvermögen, eine Außenhaut mit hoher Festigkeit und hoher Oberflächengüte, hohe Biegefestigkeit, hohe Energieabsorption von mechanischen Stößen, verringerte thermische Ausdehnungs- und Kriechneigung und günstiges Brandverhalten, verbunden mit einfacher Herstellungs- und Verarbeitungstechnik.

Diese Aufgaben werden gelöst durch thermoplastische Integralschaumstoffe mit verdichteter Randzone, die verstärkende Fasern in Mattenform enthalten.

Gegenstand der Erfindung sind somit faserverstärkte thermoplastische Integralschaumstoffe der Dichte 50 bis 500 kg/m$^3$ mit einer verdichteten Randzone, deren Dicke 0,05 bis 1,5 mm beträgt, enthaltend 2 bis 60 Gew.% verstärkende Fasern in Mattenform mit einer mittleren Faserlänge von mindestens 50 mm.

Gegenstand der Erfindung ist ferner ein Verfahren zur Herstellung dieser faserverstärkten thermoplastischen Integralschaumstoffen, das dadurch gekennzeichnet ist, daß man Fasermatten mit der Schmelze eines treibmittelhaltigen thermoplastischen Polymeren unter einem Druck verpreßt, bei dem ein Aufschäumen der Schmelze verhindert wird, anschließend das fasermattenverstärkte treibmittelhaltige Polymere bei Temperaturen oberhalb des Erweichungspunktes ausschäumt und nach dem Erstarren des Schaumstoffs die Randzone bei Temperaturen oberhalb des Erweichungspunkts erneut verdichtet.

Aus der EP-A-148 763 sind glasfaserverstärkte thermoplastische Formteile bekannt, die 7 - 50 mm lange Glasfasern enthalten. Die Randzone der Formteile ist nicht verdichtet.

Aus der WO 84/03095 sind vernetzte Schaumstoffe auf Basis von Polystyrol, Polyetherimid oder Poly-(ether)sulfon bekannt, die 10 - 55 Gew.% verstärkende Fasern der Länge 3 bis 25 mm enthalten. Die Randzone der Schaumstoffe ist nicht verdichtet.

Die erfindungsgemäßen Integralschaumstoffe besitzen eine Dichte von 50 bis 500 kg/m$^3$, insbesondere 100 bis 350 kg/m$^3$, vorzugsweise 100 bis 250 kg/m$^3$. Die Integralschaumstoffe weisen eine verdichtete Randzone auf. Die Dichte der Randzone, die im allgemeinen eine Dicke zwischen 0,05 und 1,5 mm, vorzugsweise 0,2 bis 0,9 mm besitzt, beträgt das 1,5 bis 20 fache, vorzugsweise das 2 bis 10 fache der Dichte der Kernzone. Der Dichteabfall vom Rand zum Kern kann stetig erfolgen. Durch eine erneute Verdichtung der Randzone wird ein steilerer Dichteabfall herbeigeführt. Man erhält dann sandwichähnliche Strukturen. Die Außenhaut kann dabei die gleiche Dichte wie das ungeschäumte Material aufweisen.

Basis des erfindungsgemäßen Integralschaumstoffs ist ein Thermoplast. Die Auswahl des Thermoplasten erfolgt nach der gewünschten Temperaturbeständigkeit des Integralschaumstoffs. Geeignete Thermoplaste sind Polyolefine, wie Polyethylen, Polypropylen; Styrolpolymerisate, wie Polystyrol, Poly-α-methylstyrol, Copolymere, die mindestens 50 Gew.% Styroleinheiten enthalten, wie Styrol-Acrylnitril-Copolymere, schlagzähes Polystyrol vom Typ des ABS, ASA und andere kautschukhaltige Polystyrole; Polyamide, wie Nylon 6, Nylon 6,6, Nylon 4,6, Nylon 12 und Nylon 6,12; aromatische Polycarbonate, wie Bisphenol-A-Polycarbonat; aromatische Polyethersulfone, z.B. die durch Polykondensation von Bisphenol A und/oder Bisphenol S und p,p'-Dichlordiphenylsulfon in Gegenwart von Alkali erhältlichen Poly(ether)sulfone; Polyphenylenether, wie Poly-2,6-dimethylphenylenoxid; Polyphenylensulfid; sowie Gemische der genannten Thermo plaste. Die Auswahl der Thermoplaste erfolgt gegebenenfalls nach ihrem Brandverhalten. Zur Erzielung eines guten Feuerwiderstands werden aromatische Polyethersulfone, Polyphenylensulfid, Polycarbonate oder auch Polyamide bevorzugt.

Die neuen Integralschaumstoffe enthalten 2 bis 50 Gew.%, vorzugsweise 5 bis 30 Gew.%, insbesondere 10 bis 25 Gew.% verstärkende Fasern in Mattenform. Bei den Fasermatten handelt es sich um zusammenhängende Flächengebilde aus wirr verlegten Endlosfasern, aus geschnittenen Fasern in ungerichteter Verteilung oder aus ganz bzw. teilweise gerichteten endlosen oder geschnittenen Fasern. Bevorzugt sind Fasermatten aus endlosen ungerichteten Fasern mit einem Flächengewicht von 100 bis 1200 g/m². Die Fasermatten können unverfestigt sein. Sie können aber auch mittels polymerer Bindemittel oder durch mechanische Verbindungstechniken, z.B. durch Nadeln, Vernähen oder Versteppen verfestigt sein. Als Fasern werden beispielsweise verwendet Kohlenstoff-Fasern, Metallfasern, Fasern aus aromatischen Polyamid und insbesondere Glasfasern. Die Einzelfasern haben im allgemeinen einen Durchmesser zwischen 8 und 15 µm und eine mittlere Länge von mindestens 50 mm, vorzugsweise mindestens 250 mm. Anstelle von Einzelfasern können auch gegebenenfalls verklebte Bündel aus mehreren Einzelfasern verwendet werden. Die Fasermatten zeigen im allgemeinen ein elastisches Verhalten. Sie lassen sich zusammenpressen verdichten und nehmen beim Entspannen wieder ihre ursprüngliche Dicke ein. Sie sind vorteilhaft darüber hinaus dehnbar, d.h. beim Aufschäumen der Thermoplastschmelze dehnen sie sich in gleicher Weise wie der aufschäumenden Thermoplast auf, so daß der Schaumstoff eine gleichmäßige Faserverteilung über seine gesamte Dicke erhält. Eine gleichmäßige Formverteilung wird vor allem bei wenig gebundenen Fasern erreicht, die eine hohe Affinität zum Thermoplast besitzen. Der expandierende Schaum nimmt dann die Fasern mit. Andererseits fixieren die Fasern auch das aufschäumende Polymer graduell. Das Expandieren verläuft gesteuert.

Die Haftung der Fasern kann durch eine geeignete ausgewählte Schlichte verbessert werden.

Auch mit Metallfasern bzw. metallisierten Kohlenstoff-Fasern lassen sich für ihre Dichte sehr steife Verbunde herstellen, die als Abschirmmaterialien gegen elektromagnetische Wirkungen Verwendung finden.

Speziell bei faserverstärktem Polyamid-Schaumstoff vermindern die Fasern die von der Umgebungsfeuchte abhängigen Dimensionsänderungen.

Generell zeigt sich, daß die in das schaumfähige Substrat eingebrachten Fasern stark nukleierend wirken. Ohne Faserzusatz oder andere Keimbildner entstehen grobzellige, ungleichmäßige Schaumstoffe. Der Nukleierungseffekt ist bei einem Zusatz von Kurzglasfasern (0,2 - 0,6 mm) besonders ausgeprägt.

Die Integralschaumstoffe können daneben übliche Zusatzstoffe in wirksamen Mengen enthalten, wie Farbstoffe, Pigmente, Antistatika, Gleitmittel, Flammschutzmittel und Keimbildner.

Zur Herstellung der mit Fasermatten verstärkten Integralschaumstoffe werden die Fasermatten mit der treibmittelhaltigen Schmelze des Thermoplasten unter einem Druck verpreßt, bei dem ein Aufschäumen der Schmelze verhindert wird.

Als Treibmittel verwendet man niedrig siedende Flüssigkeiten, die bei Temperaturen unterhalb der Schmelztemperatur des verwendeten Thermoplasten sieden und die bei der Schmelztemperatur im Thermoplasten unter Druck löslich sind. Geeignete Treibmittel sind beispielsweise aliphatische und cycloaliphatische Kohlenwasserstoffe mit 4 bis 8 C-Atomen, wie Butan, Pentan, Hexan, Cyclohexan, Heptan, Octan; aromatische Kohlenwasserstoffe mit 6 bis 8 C-Atomen, wie Benzol, Toluol, Xylol; Alkohole mit 2 bis 4-C-Atomen, wie Ethanol, Propanol, i-Propanol, Butanol; Ketone mit 3 bis 5 C-Atomen, wie Aceton, Methylethylketon und Diethylketon; cyclische Ether mit 4 bis 6 C-Atomen wie Diethylether und Diisopropylether; Ester mit 4 bis 6 C-Atomen, wie Ethylacetat, Methylpropionat, Propylacetat und Butylacetat; Chlorkohlenwasserstoffe mit 1 bis 2-C-Atomen wie Methylenchlorid, Chloroform, Dichlorethan, Trichlorethan und Chlorbenzol; Wasser; sowie Gemische der genannten Stoffe.

Das Treibmittel wird im allgemeinen in einer Menge von 4 bis 30 Gew.%, vorzugsweise 4 bis 25 Gew.%, insbesondere 8 bis 18 Gew.%, bezogen auf den Thermoplast verwendet. Das optimale Treibmittel und die optimale Menge läßt sich für den jeweiligen Thermoplast leicht durch Versuche ermitteln.

Optimale Treibmittel für das Verschäumen von Polyolefinen und Styrolpolymerisaten sind aliphatische Kohlenwasserstoffe und Halogenkohlenwasserstoffe. Beim Verschäumen von Polyamiden haben sich neben aliphatischen Kohlenwasserstoffen Alkohole und insbesondere Wasser bewährt. Aromatische Polycarbonate, Polyethersulfone, Polyphenylenether und Polyphenylensulfid werden vorteilhaft und Verwendung von Chlorkohlenwasserstoffen, Alkoholen, Ketonen, Ethern oder Estern verschäumt.

Zur Herstellung des Schaumstoffs läßt man das fasermattenverstärkte treibmittelhaltige Polymere bei Temperaturen oberhalb des Erweichungspunktes des Gemisches aufschäumen. Nach dem Erstarren des Schaumstoffs verdichtet man die Randzonen erneut bei Temperaturen oberhalb des Erweichungspunktes, beispielsweise in dem man mittels einer beheizten Presse den Schaumstoff auf 90 bis 25 %, vorzugsweise 80 bis 40 % seines Volumens zusammenpreßt.

Die Schaumstoffe lassen sich in bekannter Weise mit verschiedenartigen Deckschichten laminieren, z.B. mit solchen aus Holz, Melaminharz-Preßplatten, mit Folien oder Platten aus Kunststoffen oder Metallen. Geeignet sind auch harzgetränkte Glasfasergewebe mit Flächengewichten von 100 bis 300 g/m² (bezogen auf Glas).

Die Verbindung mit der Deckschicht kann wie üblich durch Haft- oder Schmelzkleber erfolgen. Häufig gelingt es, das Laminieren ohne solche Hilfsmittel mit dem ohnehin in einem weiteren Verfahrensschritt durchgeführten Verdichten der Randzonen bei Temperaturen oberhalb des Polymer-Erweichungspunktes zu kombinieren.

Noch einfacher lassen sich die Laminate erhalten, wenn z.B. - ungetränkte - Glasfasergewebe gleich beim ersten Verfahrensschritt zusammen mit den verstärkend wirkenden Fasermatten und dem treibmittelhaltigen Polymer verpreßt werden.

Beispiel 1

Handelsübliches expandierbares Polystyrol in Perlform mit einem Gehalt von 5 Gew.% Pentan als Treibmittel wird in einer druckfesten Form bei 110 °C zu 1 mm dicken Platten verpreßt und anschließend auf Raumtemperatur abgekühlt. In eine heiz- und kühlbare, druckfeste Tauchkantenform wird eine 1 mm dicke treibmittelhaltige Polystyrolplatte und eine Glasfasermatte vom Flächengewicht 300 g/m² mit einer Faserlänge von mindestens 250 mm (Durchmesser der Einzelfasern 11 μm, Typ U814/300 der Firma Gevetex) eingelegt. Die Presse wird geschlossen und unter einem Druck von 40 bar auf 120 bis 140 °C aufgeheizt. Die treibmittelhaltige Polystyrolschmelze durchdringt dabei die zusammengepreßte Glasfasermatte gleichförmig. Beim Öffnen der Preßform schäumt die Platte zu einem faserverstärkten Schaumstoff der Dicke 13 mm auf. Nach dem Abkühlen wird der Schaumstoff durch kurzzeitiges Verpressen bei 150 °C auf eine Dicke von 11 mm komprimiert.

Man erhält einen Integralschaumstoff in Plattenform der Dichte 180 kg/m³, der 12 Gew.% Glasfasern in Mattenform enthält.

Die Dichte des Kerns beträgt 134 kg/m³. Die Oberfläche zeigt eine makellose Glätte. Der Verbundwerkstoff hat eine etwa 0,3 mm dicke, weitgehend kompakte Oberflächenschicht, deren Dichte 540 kg/m³ beträgt.

Die Biegefestigkeit des Integralschaumstoffs beträgt 4,3 MPa, gemessen nach DIN 53423.

Beispiel 2

Polyethersulfon $(O-C_6H_4-SO_2-C_6H_4)_n$ der Vikositätszahl 55 (gemessen bei 25 °C, 1 g/100 cm³ N-Methylpyrrolidon) und die gleiche Gewichtsmenge Methylethylketon werden bis zu Gelbildung miteinander digeriert, überschüssiges Methylethylketon wird abgetrennt und das Gel unter Zusatz von 1 Gew.% Aluminiumstearat als Keimbildner bei 50 °C in einem Kneter homogenisiert und bei Temperaturen unter 100° zu 2 mm dicken Platten verpreßt. Nach 3-tägiger Lagerung der Platten beträgt der Gehalt an Methylethylketon 13 Gew.%. Die Glasübergangstemperatur des Gemisches beträgt 70 °C, gemessen nach DSC.

In einer Plattenpresse wird eine 1,8 mm dicke Platte des Polyethersulfons mit einem Gehalt von 12 Gew.% Methylethylketon zwischen zwei Glasfasermatten (Flächengewicht 300 g/cm³, Typ U814 der Fa. Gevetex, Faserdurchmesser 11 μm, mittlere Faserlänge > 250 mm) bei 220 °C verpreßt. Nach dem Abkühlen und Entformen erhält man ein schäumfähiges Halbzeug von 2 mm Dicke.

Das Halbzeug wird in einer Plattenpresse auf 200° aufgeheizt. Nach dem Öffnen der Presse erhält man durch Aufschäumen eine ca. 18 mm dicke Schaumstoffplatte. Das Treibmittel entweicht dabei gleichzeitig weitgehend; die Glasfaserstränge sind gleichmäßig im Schaumvolumen verteilt. Durch kurzfristiges erneutes Pressen bei 260 °C werden die Randzonen verdichtet. Durch diese Verdichtung werden die Fasern gut in das Polymere der Randschicht eingebettet. Man erhält eine 8,4 mm dicke faserverstärkte Integralschaumstoffplatte der Dichte 280 kg/m³, die 29 Gew.% Glasfasern enthält. Die Druckspannung bei 10 % Stauchung nach DIN 53421 beträgt 0,46 MPa, die Biegefestigkeit nach DIN 53423 10,3 MPa. Die Randzone besitzt eine Dicke von 0,8 mm, der Biege-E-Modul, gemessen nach DIN 53457 beträgt 823 MPa.

Arbeitet man wie oben beschrieben, verdichtet jedoch von 18 mm nur auf 12,3 mm Dicke, so beträgt die Dichte des Integralschaumstoffs 200 kg/m³. Die Druckspannung beträgt 0,5 MPa, die Biegefestigkeit beträgt 5,9 MPa. Die Dichte der Kernzone beträgt 124 kg/m³. Die Randzone von 0,6 mm besitzt eine Dichte von 650 kg/m³. Der Biege-E-Modul liegt bei 393 MPa.

Beispiel 3

4

Wie in Beispiel 2 beschrieben, werden zwei 1,0 mm dicke Platten aus Polyethersulfon mit einem Gehalt von 12 Gew.% Methylethylketon mit einer zwischen beide eingelegten Glasfasermatte (300 g/m²) bei 220° verpreßt. Das entstandene schaumfähige Halbzeug von 2,1 mm Dicke wird in einer Plattenpresse auf 200° geheizt. Nach Öffnen der Presse erhält man eine 22 mm dicke Schaumstoffplatte, die wegen der eingelagerten Glasfasern (11 Gew.%) eine noch rohe, unruhige Oberfläche aufweist. Nach kurzem Glätten dieser Unregelmäßigkeiten in einer Presse bei 260° besitzt die Platte eine verdichtete Randzone von ca. 0,05 mm Dicke. Die Gesamt-Rohdichte beträgt 97 kg/m³, die Druckfestigkeit 0,71 MPa, die Biegefestigkeit 1,1 MPa.

Diese geglättete Rohschaumplatte kann in einer Presse bei 260° beliebig zusammengepreßt werden. Dabei entsteht eine stark verdichtete Randzone zunehmender Dicke und Dichte, während die Kernzone weniger verändert wird. Mit zunehmender Verdichtung steigen die Biegefestigkeitswerte an:

| Bsp. | Dicke (mm) | | Dichte (kg/m³) | | Druckspannung (10 %) (MPa) (DIN 53421) | Biegefestigkeit (MPa) (DIN 43423) | Biege E-Modul (MPa) (DIN 53457-B4) |
|------|--------|----------|--------|----------|---------|-------|-------|
| | Gesamt | Randzone | Gesamt | Randzone | | | |
| 3a | 22 | ca. 0,05 | 97 | - | 0,71 | 1,1 | - |
| 3b | 15,1 | 0,7 | 148 | 580 | 0,68 | 2,8 | 213 |
| 3c | 10,0 | 0,9 | 244 | 830 | 0,55 | 7,7 | 696 |

Die nach DIN 52612 bei 10°C gemessene Wärmeleitfähigkeit des Integral-Schaumstoffs 3b lag bei 0,040 W/mK. Die erhaltene Platte 3b mit den Abmessungen 35 x 35 x 1,5 cm kann zu einem (in der Längsachse aufgeschnittenen) Halbzylinder von 22 cm Durchmesser warm verformt werden. Dies geschieht in einer auf 240° geheizten Preßform mit konkavem Sitz und konvexem Stempel. Vor dem Entformen kühlt man auf 180°.

Beispiel 4

In einem Zweiwellenextruder werden 15 Gew.-Teile Polyethersulfon (Viskositätszahl 55) sowie 0,15 Teile Aluminiumstearat pro Stunde bei 340° aufgeschmolzen, 2,2 Gew.-Teile Aceton pro Stunde zudosiert, die treibmittelhaltige Schmelze auf 105° abgekühlt und über eine Breitschlitzdüse ausgetragen. Die entstehende Bahn schäumt nur wenig an und enthält noch 11 Gew.% Aceton. Sie wird bei 80° über einen Kalander abgezogen und geglättet.

Platten der Dicke 3 mm mit einem Treibmittelgehalt von 11 Gew.% werden in einer Plattenpresse zwischen zwei Glasfasermatten (Flächengewicht 450 g/m², Typ U814/450 der Fa. Gevetex) bei 220° verpreßt. Der Glasfaseranteil beträgt 16 %.

Man läßt die treibmittelhaltige, fasermattenverstärkte Masse bei 200°C zu einer Schaumstoffplatte von 24 mm Dicke aufschäumen und verdichtet nach dem Erstarren des Schaumstoffs bei 260°C auf 15 mm.

Der erhaltene Integralschaumstoff hat eine Dichte von 158 kg/m³, eine Kerndichte von 119, eine Dichte der 0,5 mm Randzone von 610 kg/m³ und zeigt folgende mechanische Eigenschaften:
Druckspannung bei 10 % Stauchung 0,68 MPa, Biegefestigkeit 3,4 MPa.

Beispiel 4a (Vergleichsversuch)

Ein 1,4 mm dicke glasfaserfreie Platte aus Polyethersulfon mit einem Gehalt von 12 Gew.% Methylethylketon wird bei 170° in einer Plattenpresse aufgeschäumt und bei 260° kurz geglättet. Durch das Fehlen der fixierend wirkenden Glasfasermatte verläuft das Aufschäumen ungerichtet und läßt sich schwieriger beherrschen.

Man erhält eine 17,2 mm dicke, grobzellige Schaumstoffplatte der Gesamtdichte von 102 kg/m³ mit einer Randzone von ca. 0,05 mm. Die Druckspannung (10 %) beträgt 0,66 MPa, die Biegefestigkeit 0,5 MPa, der Biegemodul 29 MPa.

Beispiel 5

Arbeitet man wie in Beispiel 3, verwendet aber anstelle der Glasfasermatte von 300 g/m² einen genadelten Glasfaserfilz vom Flächengewicht 700 g/m², so erhält man nach dem Verdichten bei 260° eine Integral-Schaumstoffplatte von 9,7 mm Dicke mit einem Glasfaseranteil von 30 Gew.% und einer 0,8 mm dicken verdichteten Randzone. Die Dichte beträgt 310 kg/m³, die Druckspannung bei 10 % bzw. 15 % Stauchung 0,83 bzw. 1,23 MPa, die Biegefestigkeit liegt bei 19 MPa.

Beispiel 6

Granulat von Copolyamid 6/66 (85/15) mit einer Schmelztemperatur von 196° (DIN 53736, Verf. A) wird bei 220° zu 1 mm dicken Platten verpreßt. Zwischen zwei solchen Platten wird eine Glasfasermatte vom Flächengewicht 300 g/m² eingelegt und dieser Aufbau bei obiger Temperatur erneut zu 2 mm dicken, glasfaserhaltigen Platten verpreßt. Diese werden 2 Tage in Wasser/Ethanol-Gemisch (1:1) bei 70° gelagert. Sie haben dann 14,5 % an Gewicht zugenommen und lassen sich in einer auf 175° geheizten Presse zu 11 mm dicken, glasfaserhaltigen Rohplatten aufschäumen. Nach dem Verdichten in einer Presse bei 220° erhält man 7 mm dicke, faserverstärkte Integralschaumstoffplatten mit einer Gesamtrohdichte von 320 kg/m³. Die Randzone von 0,5 mm besitzt eine Dichte von 670 kg/m³.

Lagert man die ungeschäumten, glasfaserhaltigen Platten 10 Stunden bei 80° in Wasser, so nehmen sie 9,7 Gew.% zu. Sie lassen sich bei 180° zu einer Rohplatte von 8 mm Dicke aufschäumen. Nach dem Verdichten in einer Presse bei 220° entsteht eine 5 mm dicke Integralschaumstoffplatte, die 11,2 Gew.% Glasfasern enthält. Ihre Rohdichte beträgt 380 kg/m³, ihre Biegefestigkeit 9,6 MPa gemessen im Normklima (23°/50 % r.F.).

Beispiel 7

Man verwendet anstelle der Glasfasermatte von Beispiel 3 ein Polyaramid-Faserfilz needlona KR52 (Bay. Wollfilzfabriken, Offingen) des Flächengewichts 50 g/m² und stellt wie beschrieben eine Integral-Schaumstoffplatte von 5,8 mm Dicke mit einer 0,7 mm dicken verdichteten Randzone und einem Faseranteil von 3 Gew.% her. Die Dichte beträgt 220 kg/m³, die Druckspannung 0,7 MPa und die Biegefestigkeit 9,2 MPa.

Beispiel 8

Zwei 1 mm dicke Platten aus Polyethersulfon mit einem Gehalt von 12 Gew.% Methylethylketon werden mit einem zwischen beide eingelegten Stahlwolle-Wirrfaservlies vom Flächengewicht 200 g/m² bei 250° verpreßt. Die Stahlfaserlänge liegt zwischen 10 und 150 mm, der Durchmesser bei 70 µm, der Gewichtsanteil bei 43 Gew.%.

Man schäumt in der Presse bei 200° auf und verdichtet anschließend bei 260° zu einer 5,5 mm dicken, faserhaltigen Integral-Schaumstoffplatte. Die verdichtete Randzone mißt 0,6 mm. Die Dichte beträgt 660 kg/m³, die Druckspannung 1,1 MPa. Die Schirmdämpfung im magnetischen Nahfeld beträgt 28 dB bei 30 MHz.

Beispiel 9

Aus Polycarbonat-Granulat (SINVET 251/00 der Firma Anic; Viskositätszahl 0,7 [dl/g], gemessen bei 25° in Methylenchlorid) werden bei 200° 1 mm dicke Platten gepreßt. Zwischen zwei solcher Platten wird eine Glasfasermatte vom Flächengewicht 300 g/m² eingelegt und dieser Aufbau bei 210°C zu einem Halbzeug verpreßt. Dieses Halbzeug mit einem Glasfasergehalt von 16,5 Gew.% lagert man bei Raumtemperatur 3 Tage in einem Gemisch aus Aceton/Methylenchlorid vom Volumenverhältnis 6:4. Dabei nimmt das Gewicht um 30 % zu. Die treibmittelhaltigen Platten werden in einer Plattenpresse bei 170° aufgeschäumt und anschließend bei 190° zu einer 6 mm dicken, glasfaserhaltigen Integral-Schaumstoffplatte verdichtet.

Die Dichte beträgt 360 kg/m³, die Druckspannung 0,65 MPa, die Biegefestigkeit 5,7 MPa.

**Ansprüche**

1. Faserverstärkte thermoplastische Integralschaumstoffe der Dichte 50 bis 500 kg/m$^3$ mit einer verdichteten Randzone, deren Dicke 0,05 - 1,5 mm beträgt, enthaltend 2 bis 60 Gew.% verstärkende Fasern in Mattenform mit einer mittleren Faserlänge von mindestens 50 mm.

2. Faserverstärkte thermoplastische Integralschaumstoffe gemäß Anspruch 1, dadurch gekennzeichnet, daß der Schaumstoff aus einem Polyolefin, einem Styrolpolymerisat, einem Polyamid, einem aromatischen Polycarbonat, einem aromatischen Polyethersulfon, einem Polyphenylenether und/oder einem Polyphenylensulfid besteht.

3. Faserverstärkte thermoplastische Integralschaumstoffe gemäß Anspruch 1 bis 2, dadurch gekennzeichnet, daß die verstärkenden Fasern in Mattenform aus Glas, Kohlenstoff, aromatischem Polyamid und/oder Metall bestehen.

4. Verfahren zur Herstellung von faserverstärkten thermoplastischen Integralschaumstoffen gemäß Anspruch 1, dadurch gekennzeichnet, daß man Fasermatten mit der Schmelze eines treibmittelhaltigen thermoplastischen Polymeren unter einem Druck verpreßt, bei dem ein Aufschäumen der Schmelze verhindert wird, anschließend das fasermattenverstärkte treibmittelhaltige Polymere bei Temperaturen oberhalb des Erweichungspunktes aufschäumt und nach dem Erstarren des Schaumstoffs die Randzone bei Temperaturen oberhalb des Erweichungspunkts erneut verdichtet.